Europäisches Patentamt

European Patent Office

Office européen des brevets

(11) Publication number: **0 209 934**
**A1**

## EUROPEAN PATENT APPLICATION

(21) Application number: 86201116.0

(51) Int. Cl.⁴: **A01G 31/02**

(22) Date of filing: 25.06.86

(30) Priority: 26.06.85 NL 8501841

(43) Date of publication of application:
28.01.87 Bulletin 87/05

(84) Designated Contracting States:
BE DE FR GB LU NL SE

(71) Applicant: Sjef Trimbach Verpakking B.V.
Ravelstraat 28
4614 XD Bergen op Zoom(NL)

(72) Inventor: Trimbach, Raymundus G. L. J.
Jeneverbes 1
NL-4635 BN Huybergen(NL)

(74) Representative: Smulders, Theodorus A.H.J.
et al
Vereenigde Octrooibureaux Nieuwe Parklaan
107
NL-2587 BP 's-Gravenhage(NL)

(54) A through-flow trough.

(57) A trough (1), in particular a through-flow trough for the so-called substrate cultivation of vegetables or fruits, comprising a web of moisture-resistant cardboard or similar rigid material, wall portions (4) of which defined by longitudinal folding lines (3) are adapted to be placed at right angles to the bottom portion (2) located between the folding lines (3). In this position, they can be supported by wall supports (6) made of plastically deformable material, spaced longitudinally of the trough and having a natural rigidity, which can be transferred by bending from a flat conveyance position into a position fixing the trough walls (4) right-angled to the trough bottom - (2).

FIG. 1

EP 0 209 934 A1

# A through-flow trough.

The present invention relates to a trough, in particular a through-flow trough for the so-called substrate cultivation of vegetables or fruits, e.g. lettuce and tomatoes.

In the substrate cultivation of lettuce, a cover sheet is unrolled in a slightly inclined trough, which sheet contains preferably offset holes in which fit small clods, so-called soil blocks with forced lettuce plants. Plants thus placed in the trough, the soil blocks of which extend partly underneath the cover sheet, are fed by a water stream flowing underneath the cover sheet and to which have been added nutrients.Harvesting is effected by dragging the cover sheet from the trough and cutting off the heads of lettuce above the cover sheet. For cultivating cucumbers or tomatoes, use is made of mineral wool webs unrolled in such troughs.

A similar cultivation method on substrate in through-flow troughs has a great many advantages. Productivity is high, since the cultivation can be accurately controlled, a high area occupation is possible and partly by the rapid, entirely mechanizable harvesting method, there is a substantial economy of time. Nutrients, possibly computer-controlled, can be metered exactly with water as means of conveyance. The cultivation is sand-free and clean, soil decontamination is no longer necessary and due to the process control no crop protection chemicals are needed any longer. Moreover, there is a substantial saving in energy.

The cultivation method on substrate can be improved with regard to the through-flow troughs employed.

The troughs hitherto used are comparatively expensive in use, for they comprise a web of synthetic plastics material to be taken off a roller and hence flexible. Wall portions of said web defined by longitudinal folding lines can be placed right-angled to the bottom situated between the folding lines and have to be supported in this position. The material suitable for rolling up has so little natural rigidity that for arranging the trough at a maximally flat profile of the bottom at a slight inclination, this has to be supported at a relatively short interspace. This is done by means of U-shaped loose brackets adjusted to the outer contour of the trough, which brackets have soil pegs at the underside, unless the trough portions are installed directly on an inclined bottom. Such brackets have to be positioned accurately in the trough trajectory and, consequently, the setting up of the prior art trough is highly labour-intensive. In practice, it takes about 300 man-hours to occupy half a hectare with troughs in this manner.

It is an object of the present invention to eliminate this drawback. To this end, a trough, in particular a through-flow trough for the so-called substrate cultivation of vegetables or fruits, comprising a web of material whose wall portions defined by longitudinal folding lines can be arranged right-angled to the bottom portion situated between the folding lines and can be supported in this position, is characterized according to the present invention in that the trough is constructed of moisture-resistant cardboard or the like relatively rigid material and is fitted with wall supports spaced longitudinally of the trough and made of plastically deformable material having a natural rigidity, which can be transferred by bending from a flat conveyance position into a position fixing the trough walls right angled to the trough bottom.

Due to the rigidity of the trough material, the wall supports can be installed at a large interspace and these can be fixedly attached to the trough material. Setting up the trough, consequently, takes relatively little time, at any rate less time than when use is made of loose wall support brackets. In the trough according to the present invention, it will be sufficient to erect the trough wall portions in upright position at the place of use, while simultaneously bending the wall supports at the folding lines. Moreover, a trough made of rigid material can also be arranged in a simpler manner with a flat bottom at a slight inclination, which is necessary for ensuring a slow but reliable through-flow of the water with the nutrients.

A flat trough bottom without edges, ledges and the like obstacles on the inside, such as the trough according to the present invention, is also favourable in connection with the dragging out of the trough of a cover sheet with heads of lettuce hanging therein via the roots. Moreover, a trough having a flat inside remains better clean.

In a further embodiment of the present invention, the wall supports may be designed, in principle, as flat metal members extending in the operative supporting position along the exterior of a trough wall across the folding line and underneath the trough bottom. When erecting a trough wall, this can be engaged at a wall support so that simultaneously the support is bent in the operative position.

Furthermore, according to the present invention, by designing the wall support as flat metal strips extending across the longitudinal direction of the trough and being folded for their attachment to the trough with their end portions about the free edges of the trough wall portions, these can be mounted automatically in a simple, mechanical manner. The supports therefore form no inconvenient thickenings on the flat trough blanks, so that the interspace of the wall supports can be chosen optimally, exclusively directed at the support function, without the necessity of making allowance for offsetting, in a stack of trough portions in blank form, the supports in the stack in order to minimize the height of the stack.

. Preferably, the trough material is a laminate having a core of cardboard rendered water-repellent by impregnation at least to a limited extent, having on both sides a reinforcing layer of kraft paper and a superimposed layer of synthetic plastics, such as polyethylene, forming a barrier for water, water vapour, chemical and other external influences, while, moreover, each free edge of the trough material is provided with a moisture-impermeable plastics tape having a high tearing strength.

Through-flow troughs made of such material can be manufactured at an attractive cost price, making allowance for the lifetime.

In the specific embodiment of the wall supports attached to the trough by embracing the free edges of the trough wall portions, the water-repellent covering of the cardboard is nowhere discontinued, so that no openings for moisture penetration are formed.

By providing according to the present invention the web of material with spaced apart, transverse folding lines, it is possible, with swung-down edge regions, to fold up the web of material to a conveniently transportable package.

One embodiment of the through-flow trough according to the present invention will now be described, by way of example, with reference to the accompanying drawing, in which:

Fig. 1 is a perspective view of the through-flow trough; and

Fig. 2 shows the trough in folded-up position.

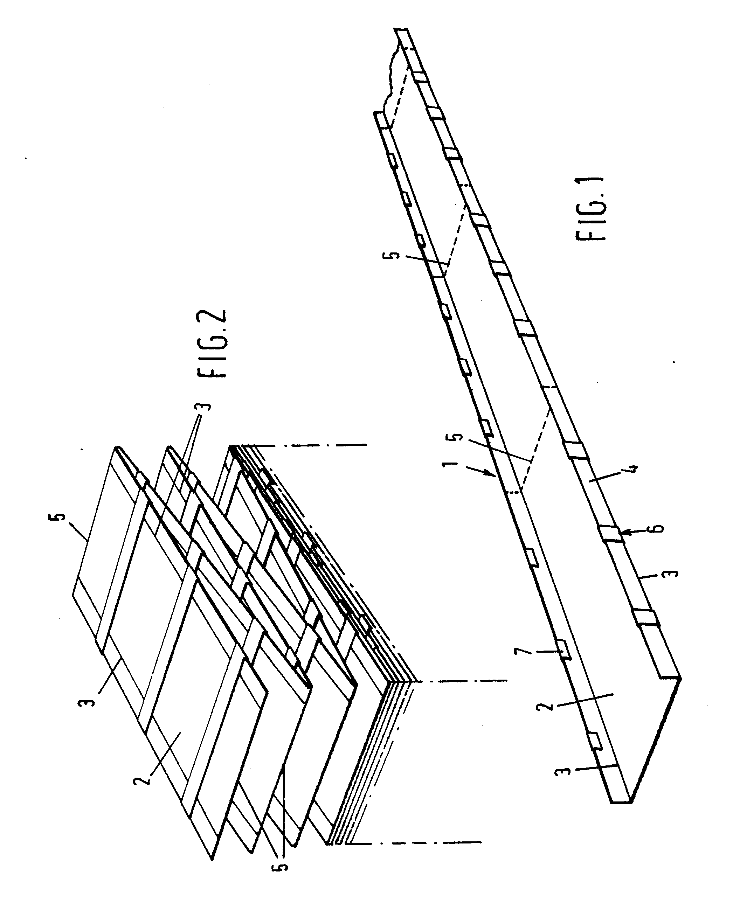

As shown in the drawing, a through-flow trough 1 comprises a flat bottom 2 defined by two longitudinal folding lines 3 and having on the exterior of the longitudinal folding lines 3 wall portions 4 which, in the position shown in Fig. 1, form the upright sidewalls of the trough. Figs. 1 and 2 also show transverse folding lines 5 for folding up the trough with flatly positioned wall portions 4 to the position shown in Fig. 2.

For fixing the wall portions 4 in the upright position shown in Fig. 1, there are provided uniformly interspaced edge supports 6.

In the embodiment shown, the wall supports 6 are designed as flat metal strips extending in the blank form of the trough transversely to the longitudinal direction of the trough and being clamped with their end portions 7 about the free side edges of the trough material web. For erecting the trough as shown in Fig. 1, it is only necessary to bend over at right angles, at the folding lines 3, the metal strip portions extending beyond the folding lines 3. The natural rigidity of the material of the edge supports 6 ensures the maintenance of the erect position of the trough walls 4 in operation.

It is clear that the present invention is not limited to the embodiment shown and that various variations are possible within the scope of the present invention. For instance, the only essential feature of the edge supports 6 is that these are capable, after having been bent over at right angles, of maintaining the wall portions 4 right-angled to the trough bottom 2. It is not strictly necessary for this purpose that the edge supports extend along the entire width of the trough. They can remain restricted to the area on either side of the folding lines 3. Also the strip shape is not essential. Possibly, an edge support may have a broader portion at the folding line 3 and a narrower portion at the free edge of the trough wall 4. Underneath the centre of the trough bottom, the edge support 6 may again be narrower or lack entirely.

## Claims

1. A trough, in particular a through-flow trough for the so-called substrate cultivation of vegetables or fruits, comprising a web of material whose wall portions defined by longitudinal folding lines are adapted to be placed at right angles to the bottom portion located between the folding lines and to be supported in this position, characterized in that the trough is made of moisture-resistant cardboard or similar relatively rigid material and includes wall supports of plastically deformable material having a natural rigidity and spaced longitudinally of the trough, which can be transferred by bending from a flat conveyance position into a position fixing the trough walls right-angled to the trough bottom.

2. A trough according to claim 1, characterized in that the wall supports are designed as flat metal members extending in the operative supporting position along the exterior of a trough wall across the folding line and underneath the trough bottom.

3. A trough according to claim 2, characterized in that the wall supports are designed as flat metal strips extending transversely to the longitudinal direction of the trough and being folded for their attachment to the trough with their end portions about the free edges of the trough wall portions.

4. A trough according to any one of the preceding claims, characterized in that the trough material is a laminate having a core of cardboard rendered water-repellent by impregnation at least to a limited extent, said cardboard having on both sides a reinforcing layer of kraft paper and a superimposed layer of synthetic plastics, such as polyethylene, forming a barrier for water vapour, chemical and other external influences.

5. A trough according to claim 4, characterized in that each free edge of the trough material is provided with a moisture-impermeable plastics tape having a high tearing strength.

6. A trough according to any one of the preceding claims, characterized in that the web of material is fitted with spaced apart, transverse folding lines.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 035 950 (ANSELM) * Column 3, lines 52-55; column 7, line 66 - column 8, line 2; claims 1-3,21,22; figures 24,25 * | 1 | A 01 G 31/02 |
| A | FR-A-2 555 016 (REKO) * Claims 1,5; figures 1-3 * | 1 | |
| A | GB-A-1 562 182 (IMPERIAL CHEMICAL) * Page 3, lines 19-40; figures 2,3 * | 1 | |

---

TECHNICAL FIELDS SEARCHED (Int. Cl.4)

A 01 G

The present search report has been drawn up for all claims

| Place of search | Date of completion of the search | Examiner |
|---|---|---|
| THE HAGUE | 07-10-1986 | HERYGERS J.J. |